(19) **Europäisches Patentamt / European Patent Office / Office européen des brevets**

(11) **EP 4 759 993 A1**

(12) **EUROPEAN PATENT APPLICATION**
published in accordance with Art. 153(4) EPC

(43) Date of publication:
**17.06.2026 Bulletin 2026/25**

(21) Application number: **24851366.5**

(22) Date of filing: **28.05.2024**

(51) International Patent Classification (IPC):
**D06M 15/59** $^{(2006.01)}$    **C08J 5/06** $^{(2006.01)}$
**D06M 101/40** $^{(2006.01)}$

(52) Cooperative Patent Classification (CPC):
**C08J 5/06; D06M 15/59;** D06M 2101/40

(86) International application number:
**PCT/JP2024/019501**

(87) International publication number:
**WO 2025/032932 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.08.2023 JP 2023128633**

(71) Applicant: **TEIJIN LIMITED
Kita-ku,
Osaka-shi,
Osaka 530-0005 (JP)**

(72) Inventors:
• **YOSHIKAWA, Hidekazu
Osaka-shi, Osaka 530-0005 (JP)**
• **SUZUKI, Yuki
Osaka-shi, Osaka 530-0005 (JP)**

(74) Representative: **Gulde & Partner
Patent- und Rechtsanwaltskanzlei mbB
Berliner Freiheit 2
10785 Berlin (DE)**

(54) **CHOPPED CARBON FIBER**

(57)    It is an object of the present invention to provide a chopped carbon fiber capable of providing excellent composite properties, and relates to a chopped carbon fiber having a carbon fiber and a sizing agent attached to the surface of the carbon fiber, wherein the chopped carbon fiber exhibits 108 MPa to 140 MPa interfacial adhesion and wherein the amount of the attached sizing agent with respect to the carbon fiber is 0.7% by mass to 4.0% by mass.

EP 4 759 993 A1

## Description

FIELD

The present invention relates to a chopped carbon fiber (a chopped fiber of carbon fiber). In particular, the present invention relates to a chopped carbon fiber for use in compound molding and to a method of producing the same.

BACKGROUND

Carbon fibers have excellent specific strength and specific elastic modulus and are lightweight, and therefore are used as reinforcing fibers for thermosetting resins and thermoplastic resins in a wide range of applications such as aircraft, sports and leisure, and general industry. As applications expand, carbon-fiber reinforced composite materials (CFRP, hereinafter also referred to as composites) are required to have higher performances.

In order to produce a carbon-fiber-reinforced composite material, a compound having a resin and carbon fibers dispersed in the resin can be used. Specifically, for example, a pellet-shaped compound (a pellet) may be melted and injection-molded to produce a carbon fiber-reinforced composite material. The carbon-fiber-reinforced composite material formed from the compound has a structure in which carbon fibers are dispersed in a resin, unlike, for example, the case where a sheet made of carbon fibers aligned in one direction is impregnated with a resin.

Such pellets can be produced, for example, by kneading a chopped carbon fiber and a resin and then extrusion-molding it.

In the manufacturing process of carbon fibers, a sizing agent is applied to the carbon fibers for the purpose of, for example, improving the process-passing properties of the carbon fibers and improving the affinity between the carbon fibers and a matrix resin in a composite material.

Patent Literature 1 (PTL 1) describes a binder for inorganic fibers containing an ester of a specific carboxylic acid component and a specific alcohol component.

Patent Literature 2 describes a sizing agent containing, as components thereof, at least a polyoxyalkylene group and an epoxy group.

Patent Literature 3 describes a sizing agent for carbon fiber bundles containing an aliphatic epoxy resin.

Patent Literature 4 describes a carbon fiber bundle to which a sizing agent is attached, wherein the sizing agent comprises an aromatic thermoplastic resin having a softening point range of 80 to 200 °C and an aromatic diester.

Patent Literature 5 describes a sizing agent containing an amine adduct and a polyurethane, wherein the amine adduct is a reaction product of an epoxy compound and an amine compound.

In addition, conventionally, in order to improve the physical properties of a composite, various improvements have been studied for carbon fibers.

Patent Literature 6 discloses a carbon fiber bundle, wherein the coefficient of friction, the amount of oxygen-containing functional groups on the surface of a carbon fiber, and the tensile strength and elastic modulus of the strand are set within a specific range. This document describes, as an object of the invention, the improvement of composite properties of carbon fibers.

Patent Literature 7 describes carbon fibers which exhibit specific ranges of average single fiber tensile strength, resin-impregnated strand tensile strength, fiber friction coefficient, and amount of thermally decomposable organic substances. This document describes, as an object of the invention, the provision of carbon fibers exhibiting ultra-high strength composite properties.

[Citation List]

[Patent Literature]

[PTL 1] JP 2002-339246 A
[PTL 2] JP 2003-3376 A
[PTL 3] JP 2005-264383 A
[PTL 4] JP 2005-281955 A
[PTL 5] JP 2016-3412 A
[PTL 6] JP S 60-239521 A
[PTL 7] JP S 61-296123 A

[Technical Problem]

As explained above, the chopped carbon fibers (the chopped fibers of carbon fiber) can be used to produce a composite. In addition, in order to improve handleability, moldability, composite properties, etc., a sizing agent can be applied to a carbon fiber to produce a sizing-agent-attached chopped carbon fiber.

There was a case where, when conventional chopped carbon fibers are used to produce a carbon-fiber-reinforced composite, in particular, to produce a composite and then produce a carbon-fiber-reinforced composite material using it, sufficient physical properties (particularly mechanical properties) are not obtained for such a composite. In addition, in the conventional chopped carbon fiber, there were cases where it is difficult to provide chopped carbon fibers exhibiting excellent composite characteristics while exhibiting a relatively low gas generation rate at high temperature.

It is an object of the present invention to provide a chopped carbon fiber which can provide excellent composite properties. In particular, it is an object of the present invention to provide a chopped carbon fiber which exhibits a relatively reduced gas generation rate and which is able to provide particularly good composite properties.

[Solution to Problem]

The above-described problem of the present invention can be solved by the following embodiments according to the present invention.

<Embodiment 1>

A chopped carbon fiber comprising a carbon fiber and a sizing agent attached to the surface of the carbon fiber,

wherein the chopped carbon fiber exhibits an interfacial adhesion of 108MPa to 140MPa, and
wherein the amount of the attached sizing agent is 0.7 % by mass to 4.0 % by mass, with respect to the carbon fiber.

<Embodiment 2>

The chopped carbon fiber of Embodiment 1, wherein the sizing agent comprises a polyimide resin.

<Embodiment 3>

The chopped carbon fiber according to Embodiment 2, wherein the amount of the polyimide resin in the sizing agent is more than 50% by mass, with respect to the total amount of a resin in the sizing agent.

<Embodiment 4>

The chopped carbon fiber according to any one of Embodiments 1 to 3, wherein the amount of the attached sizing agent is 0.7% by mass to 2.5% by mass, with respect to the carbon fiber.

<Embodiment 5>

The chopped carbon fiber according to any one of Embodiments 1 to 3, wherein the interfacial adhesion is 115 MPa to 135 MPa.

<Embodiment 6>

The chopped carbon fiber according to any one of Embodiments 1 to 3, wherein the carbon fiber has a surface oxygen concentration O/C of 15% to 35%.

<Embodiment 7>

The chopped carbon fiber according to any one of Embodiments 1 to 3, wherein the carbon fiber has a mean single fiber diameter of 4.5 μm to 7.0 μm.

<Embodiment 8>

The chopped carbon fiber according to any one of Embodiments 1 to 3, wherein the carbon fiber has a mean length of 1 mm to 30 mm.

<Embodiment 9>

The chopped carbon fiber according to any one of Embodiments 1 to 3, wherein the carbon fiber satisfies at least one of the following conditions (a) to (c):

(a) the tensile strength of the carbon fiber is 4000 MPa to 8000 MPa,
(b) the tensile modulus of the carbon fiber is 270 GPa to 310 GPa,
(c) the single fiber compressive strength of the carbon fiber is 1500 MPa to 2500 MPa.

<Embodiment 10>

The chopped carbon fiber according to any one of Embodiments 1 to 3, wherein a weight loss rate when heat-treated at 400 °C. for 20 minutes in air is less than 0.40%.

<Embodiment 11>

The chopped carbon fiber according to any one of Embodiments 1 to 3 for use in a compound molding.

<Embodiment 12>

A method of producing a carbon-fiber-reinforced composite material comprising:

providing the chopped carbon fiber according to any one of Embodiments 1 to 3 and a resin, preparing a pellet by kneading the melted resin and the chopped carbon fiber, and
molding the prepared pellets under heating to form a carbon-fiber-reinforced composite material.

<Embodiment 13>

The method for producing a carbon-fiber-reinforced composite material according to Embodiment 12, comprising using a carbon fiber produced by a dry-wet spinning method to prepare the chopped carbon fiber.

[ADVANTAGEOUS EFFECTS OF THE INVENTION]

According to the present invention, it is possible to provide a chopped carbon fiber which can provide excellent composite characteristics. In particular, according to the present invention, it is possible to provide a chopped carbon fiber which exhibits a relatively reduced gas generation rate and which can provide particularly excellent composite properties, even when it is compounded for example with a matrix-resin having a relatively high melting point (e.g., a PPS resin).

BRIEF DESCRIPTION OF DRAWINGS

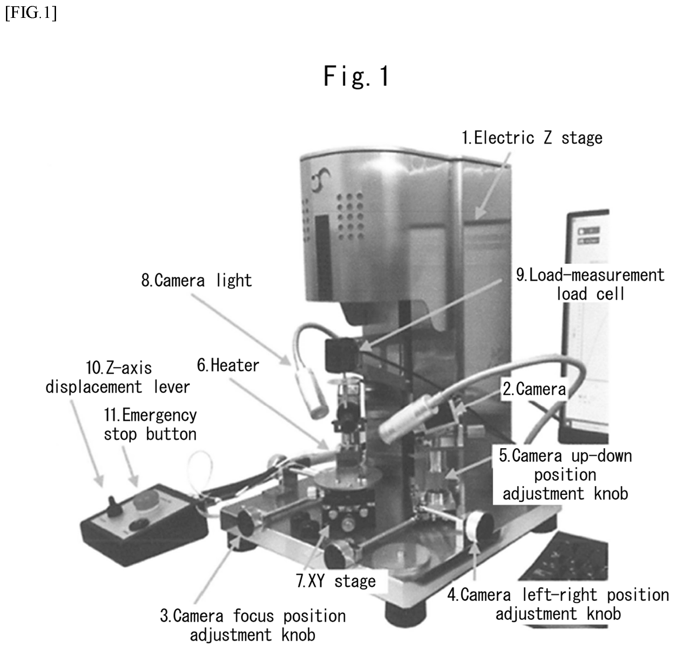

FIG. 1 illustrates an exemplary embodiment of an apparatus which can be used to measure the interfacial adhesion of carbon fibers.

DESCRIPTION OF EMBODIMENTS

Chopped carbon fiber

The chopped carbon fiber (the chopped fiber of carbon fiber) according to the present invention is a chopped carbon fiber comprising a carbon fiber and a sizing agent attached to the surface of the carbon fiber,

wherein the chopped carbon fiber exhibits an interfacial adhesion of 108 MPa to 140 MPa and
wherein the amount of the attached sizing agent is 0.7 % by mass to 4.0 % by mass with respect to the carbon fiber.

According to the chopped carbon fiber of the present invention, excellent composite characteristics can be obtained.
In general, in the manufacturing process of a carbon-fiber-reinforced composite material (a composite), for example, a carbon fiber raw material containing chopped carbon fibers is kneaded with a resin composition to be pelletized, and the pellets are injection-molded to produce a molded article. In this manufacturing process, in particular, during the process of pelletization (during the compounding process), there were cases where a chopped carbon fiber, which is a carbon fiber raw material, is broken, and as a result, desired physical properties of the composite material may not be obtained. It is considered that, in a fiber-reinforced composite material, the larger the aspect ratio (length/diameter, L/D) of the contained reinforcing fibers, the greater the tensile strength (TS) of the fiber-reinforced composite material.

Without wishing to be bound by theory, it is considered that, in the chopped carbon fiber described above according to the present invention, since the amount of the attached sizing agent is limited to a specific range and the interfacial adhesion is limited to a specific range, the carbon fiber surface is sufficiently protected during the manufacturing process of a compound and a composite, and sufficient adhesion between carbon fibers and a resin in the composite is ensured, and as a result, excellent composite characteristics are obtained. In addition, it is considered that when the amount of the attached sizing agent is in the above range, good fiber convergence of the carbon fiber is ensured in the chopped fiber, thereby improving the dispersibility of the carbon fibers in the composite.

It is considered that the chopped carbon fiber according to the present invention is particularly useful for producing a carbon-fiber-reinforced composite material having a relatively high fiber content, especially a fiber weight content of 5 to 50% by mass. In other words, it is considered that, in the case of producing a composite having a relatively high fiber content, fibers are easily broken due to the interaction between the fibers themselves. According to the fiber of the present invention, even in such a case, it is possible to suppress fiber breakage and retain relatively long fibers, and thus it is possible to obtain excellent composite strength.

The chopped carbon fiber according to the present invention is preferably a chopped carbon fiber used for a carbon-fiber-reinforced composite material having a fiber weight content of carbon fiber of 5% to 50% by mass, 5% to 45% by mass, 5% to 40% by mass, or even 10% to 40% by mass.

Chopped carbon fiber

The chopped carbon fiber (the chopped fiber of carbon fiber) according to the present invention comprises a carbon fiber and a sizing agent attached to the carbon fiber. In particular, the chopped carbon fiber is a chopped carbon fiber for use in a compound molding.

In particular, the sizing-agent-attached chopped carbon fiber according to the present invention is composed of a carbon fiber and a sizing agent attached to the carbon fiber. The sizing agent is usually attached to the surface of the carbon fiber. In one embodiment, in the chopped carbon fiber, the carbon fibers are bonded to each other via the sizing agent.

The chopped carbon fiber can be obtained, for example, by cutting a continuously produced carbon fiber bundle (carbon fiber tow) to a constant length and applying a sizing agent thereto. The cutting may be performed by a known method. A method of manufacturing a chopped carbon fiber will be described later.

The carbon fiber may have a mean length of 1 mm to 30 mm. This mean length is preferably 2 mm to 25 mm or even 3 mm to 25 mm, more preferably 3 mm to 6 mm.

The carbon fiber mean length of the chopped carbon fibers can be determined by measuring the lengths of 30 or more chopped carbon fibers using a caliper and/or an optical microscope and calculating a mean value from the measured values.

Interfacial adhesion

The chopped carbon fiber according to the present invention exhibits an interfacial adhesion of 108 MPa to 140 MPa. The present invention is based, in part, on the finding that there is a strong correlation between the interfacial adhesion of a chopped carbon fiber and composite properties. Excellent composite properties can be obtained when the interfacial adhesion is in this range.

The interfacial adhesion may be 110 MPa or more, 112 MPa or more, 114 MPa or more, 116 MPa or more, 117 MPa or more, 118 MPa or more, 120 MPa or more, 122 MPa or more, and/or 138 MPa or less, 136 MPa or less, 134 MPa or less, or 132 MPa or less. This interfacial adhesion is preferably 111 MPa to 138 MPa, more preferably 115 MPa to 135 MPa, and even more preferably more than 115 MP and 132MPa or less. Particularly good composite properties can be obtained when the interfacial adhesion is in these ranges. In the most preferred embodiment, the interfacial adhesion is 121 MPa to 134 MPa, or even 122 MPa to 132 MPa.

Interfacial adhesion can be measured by the interfacial shear strength (IFSS) measuring methods according to the present disclosure for a single fiber of a chopped carbon fiber (i.e., a single fiber of a sizing-agent-attached carbon fiber, which constitutes the chopped carbon fiber).

The interfacial adhesion can be measured by an interfacial shear strength measuring tester, in particular by a pinhole-type interfacial shear strength measuring tester. Examples of such a tester include a pinhole tester (SFT20) manufactured by Shinsousha Co., Ltd. (see FIG. 1).

More specifically, the interfacial shear strength (IFSS) measurement can be performed using an interfacial shear strength measurement tester according to the following procedures (1) to (4).

(1) Preparation of thermoplastic resin sample

(a) A measuring plate (16mm×4mm× thickness 0.2mm) with a pinhole (150μm in diameter and 200μm in depth) is prepared. A PEEK resin (having side lengths of about 2 mm) is prepared as a resin used for measurement, placed in a DSC aluminum pan, and melted using a heater. PEEK resin can be melted at 400°C. (above the melting point).
(b) When the resin is melted, the resin is put on an insect pin, and the molten resin is poured into the pinhole for measurement to form a resin part.

(2) Attachment of single fiber

A single fiber of a chopped carbon fiber (a single fiber of a sizing-agent-attached carbon fiber, which constitutes a chopped carbon fiber) is prepared. A single fiber cut into a 3 to 6 mm is embedded in the resin part of the measuring plate with the pinhole using a jig (pin vise) while the resin part is heated. The embedding depth is in principle 60μm. If the buried depth is 50μm or less, it should be re-created, since otherwise a displacement-load curve may not be obtained accurately.

(3) Connection to a load cell

The single fiber embedded in the resin is adhered to a jig (needle) connected to a load cell using an instantaneous adhesive (Aron alpha (trademark)) and cured. At this time, it is necessary to take a sufficient adhered surface since, if the adhered surface is not sufficient, the fiber may simply came out when pulling out from the thermoplastic resin, which makes it impossible to obtain an accurate measurement.

(4) Measurement

A pull-out test measurement is performed in a pull-out mode at 25° C., and, from the maximum load, embedding length, and fiber diameter, a maximum interfacial shear strength τ (interfacial adhesion IFSS) is obtained according to the following equation, which is used as the interfacial adhesion:

$$\tau = F/(\pi \times d \times L)$$

wherein, $\tau$ = maximum interfacial shear strength (MPa), F = maximum load (maximum drawing load) (mN), L = embedded length (μm), d = fiber diameter (μm)).
The interfacial adhesion can be optimized, for example, by adjusting the type of sizing agent, the amount of attached sizing agent, and the surface oxygen concentration O/C of a carbon fiber.

Amount of decomposition at 400° C.

In a preferred embodiment according to the present invention, when the chopped carbon fiber is heat-treated at 400°C. for 20 minutes in air, the weight loss rate (also referred to as "amount of decomposition at 400 °C.") is less than 0.40%.
In this case, since gas generation is suppressed when the chopped carbon fiber is subjected to a high-temperature treatment (for example, a high-temperature treatment at 320°C. or higher, 360°C. or higher, or even 400°C. or higher), a composite material having particularly good quality is obtained. This range of the "amount of decomposition at 400 °C." can be achieved, for example, by reducing the amount of sizing agent attached to the carbon fiber and/or by selecting the type of sizing agent.
The weight loss rate (wt %) for a chopped carbon fiber is the amount of decomposition at 400 °C. (mass %), which can be measured by a thermogravimetric differential calorimeter (TG-DTA) at 400° C. for 20 minutes under air atmosphere condition. Since the sizing agent volatilizes at 400° C., this weight loss rate can be used as a value indicating the gas generation rate at high temperature.
More preferably, the amount of decomposition at 400 °C. is 0.38% or less, 0.36% or less, 0.34% or less, 0.32% or less, or even 0.30% or less, with respect to the total weight of the chopped carbon fiber. The lower limit of the amount of decomposition at 400 °C. is not particularly limited, but may be, for example, 0.01% or more, 0.05% or more, or 0.08% or more.

Amount of attached sizing agent

The present invention is also based on the finding that the amount of a sizing agent affects the composite properties. In the chopped carbon fiber according to the present invention, the amount of the attached sizing agent is 0.7 % by mass to 4.0 % by mass with respect to the carbon fiber constituting the chopped carbon fiber. Details of the sizing agent will be described later.

The amount of the attached sizing agent s preferably from 0.7% by mass to 2.5% by mass, more preferably from 0.8% by mass to 2.4% by mass, particularly preferably from 1.0% by mass to 2.0% by mass, most particularly preferably from 1.2% by mass to 1.8% by mass, with respect to the carbon fiber.

The amount of the attached sizing agent can be measured according to JIS R7604 method (Method B).

In a particularly preferred chopped carbon fiber according to the present invention, the type and content of the sizing agent satisfy at least one of the following conditions, and in particular, satisfy all of the following conditions:

the sizing agent comprises a polyimide (PI) resin;
the content of a polyimide resin in the sizing agent is greater than 50% by mass, with respect to the total amount of a resin in the sizing agent (in particular, with respect to the total amount of sizing agent); and
the amount of the attached sizing agent is 0.7% by mass to 2.5% by mass with respect to the carbon fiber.

According to this embodiment of the present invention, a reduced gas generation rate may be obtained while simultaneously achieving particularly good composite properties.

In this embodiment of the present invention, in particular, all of the above three conditions are satisfied; in other words, the interfacial adhesion of the carbon fiber is limited to a specific range as described above, the range of the amount of the attached sizing agent is further limited, and the type and content of a resin contained in the sizing agent is further limited. The present inventors have found that, according to such a limited range, particularly excellent composite properties can be obtained simultaneously with a reduced gassing rate, even when it is compounded with, for example, a matrix resin having a relatively high melting point (e.g., PPS resin).

For example, in applications requiring heat resistance, resins having a relatively higher melting point (e.g., PEEK) are used, and thus if the amount of sizing agent is too large, gases may be generated due to the sizing agent as a consequence of exposure to an elevated temperature (e.g., 320° C. or higher, or even 360° C. or higher, or 400° C. or higher) during the manufacturing process of a pellet and/or a molded article. This can, for example, contaminate a mold used in an injection molding. Further, there is a possibility that the physical properties of a carbon-fiber-reinforced composite material may be adversely affected, and for example, a resin may be decomposed into smaller molecules by the generated gas.

On the other hand, when the amount of the attached sizing agent is reduced, it may generate a region on the carbon fiber surface which is not protected by the sizing agent, as a result of which, the carbon fiber surface may not be sufficiently protected during the manufacturing process of a compound and a composite, and, for example, the aspect ratio of the retained carbon fibers may be reduced due to the carbon fiber breakage, which may result in a possibility that sufficient composite characteristics may not be obtained.

In contrast, in the above-described particularly preferred chopped carbon fibers according to the present invention, while the amount of the attached sizing agent is reduced to a specific range, the interfacial adhesion of the carbon fiber and the components of the sizing agent are further specified, and as a result, it is considered that a composite having improved physical properties and a relatively low gas generation rate is provided.

Sizing agent

In the present disclosure, "sizing agent" means a component which remains on a carbon fiber after a sizing composition is applied to the carbon fiber and dried, wherein it may be solid or liquid.

The sizing agent may comprise or consist of a resin.

Such a resin includes, but is not limited to, polyimide resin (PI), polyester resin, polyurethane resin, epoxy resin, blocked isocyanate (BIC), polyether ether ketone resin (PEEK), polyaryletherketone (PAEK), etc., wherein a resin having high heat resistance is preferred for use.

Polyimide

The sizing agent preferably comprises a polyimide resin.

The polyimide resin is a polymer containing a repeating unit having an imide bond. The polyimide resin is in particular an aromatic polyimide resin. The polyimide resin can be obtained, for example, by a method comprising polycondensation of a tetracarboxylic dianhydride and a diamine in a solvent.

The polyimide resin according to the present invention is preferably a polyimide (especially an aromatic polyimide) having no melting point and having a thermal decomposition temperature of 400° C. or more (especially 450° C. or more). The melting point of a resin such as polyimide can be measured by DSC (differential scanning calorimetry) method according to JIS K7121, as a temperature of the apex of a melting peak when the temperature is increased at 10 ° C./min in a nitrogen atmosphere. The thermal decomposition temperature can be measured by a TG (thermogravimetry) method in accordance with JIS K7120 at a temperature rise rate of 10° C./min in a nitrogen atmosphere.

The polyimide resin may be obtained by attaching an aqueous solution containing a precursor compound of polyimide (or a mixture thereof) to a carbon fiber, followed by an imidization by a drying treatment at a predetermined temperature.

In one embodiment according to the present invention, the content of polyimide resin in a sizing agent is greater than 50% by mass with respect to the total amount of a resin in the sizing agent (in particular, with respect to the total amount of sizing agent). In this case, it is possible to provide a chopped carbon fiber which exhibits a particularly reduced gas generation rate.

The content of the polyimide resin in the sizing agent may be greater than or equal to 55% by mass, greater than or equal to 60% by mass, or greater than or equal to 65% by mass, and/or less than or equal to 100% by mass, less than or equal to 90% by mass, or less than or equal to 80% by mass, with respect to the total amount of the resin in the sizing agent (in particular, the total amount of the sizing agent). In a particularly preferred embodiment, the sizing agent comprises from 70 to 100% by mass, from 80 to 100% by mass, or even from 90 to 100% by mass of the polyimide resin, and further the sizing agent consists of a polyimide resin.

Polyimide resin and blocked isocyanate

In one embodiment according to the present invention, the sizing agent comprises a polyimide resin and a blocked isocyanate (in particular, a polymerization product of a blocked isocyanate). In this case, particularly good composite properties may be obtained.

In a sizing agent comprising a polyimide resin and a blocked isocyanate, when the content of the polyimide resin is 55% by mass or more, 60% by mass or more, or 65% by mass or more, and/or 100% by mass or less, 90% by mass or less, or 80% by mass or less (e.g., 55 to 90% by mass, or 60 to 80% by mass), a particularly reduced gas generation rate may be obtained simultaneously with particularly good composite properties. In addition, when the amount of the blocked isocyanate is 50% by mass or more, there is a possibility that a good gas generation rate may not be obtained.

O/C ratio of carbon fiber surface

In a preferred embodiment of the chopped carbon fiber according to the present invention, the surface oxygen concentration O/C of the carbon fiber (O/C ratio; a ratio of O atoms to C atoms) is from 15% to 35% (which may also be denoted as 0.15 to 0.35). The O/C ratio is more preferably 18% to 29%, still more preferably 20% to 28%, and most preferably 22% to 27%. In this case, particularly good composite properties can be obtained by the increased interfacial adhesion of the carbon fibers.

The O/C ratio of the surface of a carbon fiber can be measured by X-ray photoelectron spectroscopy (XPS) on the surface of the carbon fiber after the sizing agent has been removed therefrom using an appropriate solvent, etc.

Carbon fiber

The chopped carbon fiber of the present invention comprises a carbon fiber.

Mean length of carbon fiber

The carbon fiber according to the present invention may be 1 mm to 30 mm. This mean length is preferably 2 mm to 25 mm or even 3 mm to 25 mm, more preferably 3 mm to 6 mm.

The mean length of the chopped carbon fiber can be obtained by measuring the lengths of 30 or more chopped carbon fibers using a caliper and/or an optical microscope, and calculating a mean value from the measured values.

The carbon fiber is not particularly limited, and may be any carbon fiber such as a pitch-based fiber, a rayon-based fiber, or a polyacrylonitrile (PAN) based fiber, but is preferably an acrylonitrile-based carbon fiber, in view of operability, process-passing ability, mechanical strength, etc. There is no particular limitation on the characteristics such as fineness and intensity of the carbon fiber, and any known carbon fiber can be used without limitation.

The form of the carbon fiber is not particularly limited, but may be a form of a carbon fiber bundle composed of a plurality of single fibers (filaments). The number of filaments constituting the carbon fiber bundle is preferably 1000 to 80,000, and more preferably 3000 to 50,000, from the viewpoint of productivity.

Mean single fiber diameter of carbon fiber

In a preferable embodiment according to the present invention, the mean single fiber diameter of a carbon fiber is 4.5μm to 7.0μm.
The mean single-fiber-diameter of a carbon fiber can be obtained by averaging the diameters of 30 or more carbon fibers which have been measured using an image acquired with an electron microscope, etc.

Compressive strength of single fiber

In a preferred embodiment of the present invention, the single fiber compressive strength of the carbon fiber is 1500 MPa to 2500 MPa. The single fiber compressive strength of the carbon fiber is more preferably 1550 MPa to 2450 MPa or even 1600 MPa to 2400 MPa, particularly preferably 1700 MPa to 2300 MPa or even 1800 MPa to 2200 MPa. When the single fiber compressive strength of the carbon fiber is high, it is possible to provide a chopped carbon fiber which can provide a composite having relatively high physical properties.
The single fiber compressive strength of the carbon fiber can be measured using a single-fiber-compression device, for example, from MCT-W200J (manufactured by SHIMADZU Corporation). Specifically, a single fiber is taken from a carbon fiber bundle and fixed to the sample table. Then, in a compressive test mode, a measurement can be performed under conditions of the test force 200 gf, the loading rate 0.122 gf/sec, and the holding period of 0 sec.

Tensile strength

In a preferred embodiment according to the present invention, the tensile strength of the carbon fiber is 4000 MPa to 8000 MPa, or even 4500 MPa to 7500 MPa. The tensile strength of the carbon fiber is more preferably 5000 MPa to 7500 MPa, particularly preferably 5800 MPa to 7200 MPa or even 6000 MPa to 7000 MPa. When the tensile strength of the carbon fiber is high, it is possible to obtain a chopped carbon fiber which provides a composite having relatively high physical properties.

Tensile modulus

In a preferred embodiment according to the present invention, the tensile modulus of the carbon fiber is 270 GPa to 310 GPa. The tensile modulus of the carbon fiber is more preferably 280 GPa to 305 GPa, particularly preferably 290 GPa to 305 GPa, or even 290 GPa to 300 GPa. When the tensile modulus of carbon fiber is high, it is possible to obtain a chopped carbon fiber which provides a composite having relatively high physical properties.
The tensile strength and tensile modulus (strand modulus) of a carbon fiber can be measured according to JIS R 7608.
In one preferred embodiment of the present invention, for the chopped carbon fiber, the value (A×B) determined by the product of the tensile modulus (A) and the interfacial adhesion (B) of the carbon fiber is greater than 32,000. This value (A×B) is more preferably greater than or equal to 32,300, or greater than or equal to 32,500, particularly preferably greater than or equal to 34,000, greater than or equal to 35,000, greater than or equal to 36,000, greater than or equal to 37,000, or even greater than or equal to 38,000. The higher the value (A×B), the better the physical properties of the composite produced using the chopped carbon fiber.
In a preferred embodiment of the present invention, for the chopped carbon fiber, a value (B×C) determined from the product of the single fiber compressive strength (C) of the carbon fiber and the interfacial adhesion (B) is 182,000 or more. This value (B×C) is more preferably 183,000 or more, or even 185,000 or more, particularly preferably 200,000 or more, 220,000 or more, 230,000 or more, 240,000 or more, or even 250,000 or more. The higher the value (B×C), the better the physical properties of a composite produced using the chopped carbon fiber.

Method for producing chopped carbon fiber

The method for producing the chopped carbon fiber according to the present invention is not particularly limited, but it can be preferably produced by the following production method according to the present invention.
A method of manufacturing a chopped carbon fiber according to the present disclosure comprises:

(a) providing a carbon fiber (a step of providing carbon fiber), and

(b) applying a sizing composition to the surface of the carbon fiber and optionally drying it to form a chopped carbon fiber having the carbon fiber and the sizing agent attached onto the surface of the carbon fiber (a step of applying sizing agent)

wherein the interfacial adhesion of the chopped carbon fiber is 108 MPa to 140 MPa and
wherein the amount of the sizing agent attached to the carbon fiber is 0.7 % by mass to 4.0 % by mass with respect to the carbon fiber.

For details of the components (e.g., the carbon fiber and the sizing agent contained in the sizing composition) in this manufacturing method, reference can be made to the above description of the chopped carbon fibers according to the present invention.

Step of providing carbon fiber

In the step of providing carbon fiber, a carbon fiber (in particular, a chopped carbon fiber) is provided. Preferably, the carbon fiber provided has a mean length of 1 mm to 30 mm, more preferably 2 mm to 25 mm or even 3 mm to 25 mm, even more preferably 3 mm to 6 mm.
In this step, for example, a carbon fiber (especially a chopped carbon fiber) can be obtained by cutting a continuously produced carbon fiber bundle with a cutter device, etc. Namely, the manufacturing method may comprise a cutting step (a cut step), in which, for example, a carbon fiber bundle is cut, thereby providing a carbon fiber having a desired mean length.
For a detailed description of the interfacial adhesion (IFSS), reference can be made to the above description of the chopped carbon fiber according to the present invention.
The method of providing a carbon fiber is not particularly limited, and can be produced by a known method. The carbon fiber can be produced, for example, by the method described below.
For example, an acrylic precursor fiber is produced by preparing a spinning dope comprising a polyacrylonitrile-based polymer; coagulating the spinning dope by a dry spinning method, a wet spinning method, or a dry-wet spinning method (Air-gap spinning method) to obtain a solidified fiber; and performing water washing, drawing, oiling agent application (oiling), drying, and steam drawing on the obtained solidified fiber. The polyacrylonitrile-based polymer can be polymerized by, for example, a solution polymerization method or a suspension polymerization method. In steam drawing, the total drawing ratio can be 5 to 15 times. As the solvent for spinning, an organic solvent, an inorganic solvent, or an inorganic salt solvent can be used.
The spinning process described above may in particular be a dry-wet spinning process and a wet spinning process. In particular, when a precursor fiber produced by a dry-wet spinning method is used, carbon fibers having relatively high physical properties (particularly, relatively high tensile strength and tensile modulus) may be obtained. According to the dry-wet spinning method, a carbon fiber having excellent surface smoothness can be obtained.
The acrylic precursor fiber may preferably be obtained by homo-polymerizing or copolymerizing monomers containing 90% by mass or more, more preferably 95% by mass or more of acrylonitrile, and 10% by mass or less of other monomers. Examples of the other monomers include itaconic acid and (meth)acrylic acid ester. In terms of production efficiency, the number of filaments of the precursor fiber is preferably 1000 or more, and more preferably 3000 or more.
The precursor fiber is subjected to flameproofing treatment, for example, by heating in heated air at 200 to 300° C. for 10 to 100 minutes.
The flameproofing-treated precursor fiber is then carbonized, for example, at 300 to 2000°C. in an inert atmosphere to obtain a carbon fiber.
The obtained carbon fiber is preferably subjected to a surface oxidation treatment. The surface oxidation treatment can be performed by any conventionally known method, but it is industrially common to use chemical solution electrolytic oxidation, since a device is simple and a process is easy to manage. The electric quantity of the surface-oxidizing treatment is preferably 10 to 150 coulombs with respect to 1 g of carbon fiber. When the amount of electricity is adjusted within this range, it is possible to obtain a carbon fiber having excellent physical properties as a fiber and having improved adhesiveness to a resin. Examples of the electrolytic solution include nitric acid, sulfuric acid, ammonium sulfate, and sodium bicarbonate. The electrolyte concentration of the electrolyte solution is preferably 0.1 or more of standard amount, and more preferably 0.1 to 1 of standard amount.

Step of applying sizing agent

In the step of applying a sizing agent, the sizing agent can be applied, for example, by contacting the carbon fiber with a sizing composition containing the sizing agent. Specific examples include a dipping method in which the carbon fiber is immersed directly in the sizing composition, a spraying method in which the sizing composition is sprayed onto the carbon fiber, etc.

Drying treatment

After the step of applying sizing agent, a drying treatment for removing the solvent and dispersion medium contained in the sizing composition can be further performed. This drying treatment can be performed by a known method.

Sizing composition

The sizing composition comprises a sizing agent and a dispersion medium or solvent. A method for preparing the sizing composition is not particularly limited, and a known preparation method can be used. For details of the sizing agent, reference can be made to the above description of the chopped carbon fiber according to the present invention.
Examples of the dispersion medium or the solvent of the sizing composition include water and an organic solvent (for example, alcohols such as methanol and acetone), but a dispersion system of water is preferable from the viewpoint of reducing the environmental load.
The sizing composition may be a sizing agent aqueous dispersion (emulsion) prepared by an emulsification with a surfactant.
When the sizing composition is a sizing solution or a sizing dispersion, the concentration of the sizing agent in the solution or dispersion may be from 0.5 to 50% by mass.
The surfactant is not particularly limited, and an anionic surfactant, a cationic surfactant, a nonionic surfactant, etc., can be used.
Examples of the emulsification method include a method using a batch equipped with a stirring blade, a method using a ball mill, a method using a shaker, and a method using a high shear emulsifier such as a gaulin homogenizer.
The surfactant is not particularly limited as long as the sizing agent can be emulsified, but is usually added in an amount of about 0.1 to 30% by mass.
Examples of the sizing agent contained in the sizing composition include a polyimide precursor and a polyester resin, a polyurethane resin, an epoxy resin, a blocked isocyanate, a polyether ether ketone resin (PEEK), and a polyaryletherketone (PAEK), and a resin having heat resistance is preferable for use.
The polyimide resin and the polyester resin can be applied to the carbon fiber in the form of an aqueous solution, for example.
A polyurethane resin, an epoxy resin and a blocked isocyanate can be applied to he chopped carbon fiber, for example, in the form of an emulsion.

Compound

The present disclosure includes a compound produced using the chopped carbon fiber according to the present invention. The compound may be pelletized (a pelletized compound).
The compound contains a carbon fiber derived from the chopped carbon fiber according to the present invention, and a resin. For the carbon fiber comprised in the compound, reference may be made to the above description of the chopped carbon fiber according to the present invention.
The resin contained in a compound (in particular, a pellet) may be a thermosetting resin or a thermoplastic resin.
Specific examples of the thermosetting resin include an epoxy resin, an unsaturated polyester resin, a phenolic resin, a vinyl ester resin, a cyanate ester resin, a urethane acrylate resin, a phenoxy resin, an alkyd resin, a urethane resin, a pre-polymerized resin of a maleimide resin and a cyanate ester resin, a bismaleimide resin, a polyimide resin and a polyisoimide resin having an acetylene terminal, a polyimide resin having a nadic acid end, etc. They can be used alone or as a mixture of two or more. Among them, an epoxy resin or a vinyl ester resin is preferable, which is excellent in heat resistance, elastic modulus, and chemical resistance. In addition to the curing agent and the curing accelerator, the thermosetting resins may also contain a commonly used colorant, various additives, etc.
Examples of the thermoplastic resin include polypropylene (PP) resin, polysulfone (PS) resin, polyether sulfone (PES) resin, polyether ketone resin, polyether ether ketone (PEEK) resin, polyamide (PA) resin, aromatic polyamide resin, polyester (PE) resin, aromatic polyester resin, polycarbonate (PC) resin, aromatic polycarbonate resin, polyetherimide (PEI) resin, polyarylene oxide resin, thermoplastic polyimide resin, polyamideimide resin, polyacetal resin, polyphenylene oxide resin, polyphenylene sulfide (PPS) resin, polyarylate resin, polyacrylonitrile resin, polyaramide resin, and polybenzimidazole resin. They can be used alone or as a mixture of two or more. A preferred thermoplastic resin is polyether ether ketone (PEEK) resin or polyphenylene sulfide (PPS) resin. These thermoplastic resins may contain a colorant, various additives, etc.
The chopped carbon fiber according to the present invention is preferably a chopped carbon fiber used for a carbon-fiber-reinforced composite material having a fiber weight content of carbon fiber of 5% to 50% by mass, 5% to 45%

**EP 4 759 993 A1**

by mass, 5% to 40% by mass, or even 10% to 40% by mass.

In one preferred embodiment, a compound according to the present invention (particularly a pellet) comprises a resin and carbon fibers dispersed in the resin.

The compound (especially the pellet) can be prepared from chopped carbon fibers and according to the present invention and a resin. Specific embodiments of the method for producing a compound are not particularly limited, and reference can be made to known methods. For example, a compound (particularly a pellet) can be produced by feeding the chopped carbon fiber according to the present invention and a resin to a twin-screw extruder and optionally kneading and extruding the mixture while heating it.

Carbon-fiber-reinforced composite material

The present disclosure includes a carbon-fiber-reinforced composite material formed using the chopped carbon fiber according to the present invention.

The carbon-fiber-reinforced composite material contains a carbon fiber derived from the chopped carbon fiber according to the present invention, and a resin.

In one preferred embodiment, the carbon-fiber-reinforced composite material according to the present invention is a carbon-fiber-reinforced composite material which comprises a resin and carbon fibers dispersed in the resin, wherein the carbon-fiber-reinforced composite material has a fiber weight content of carbon fiber Wf of 5 % by mass to 50 % by mass, 5 % by mass to 45 % by mass, 5 % by mass to 40 % by mass, or even 10 % by mass to 40 % by mass.

For the carbon fiber comprised in the carbon-fiber-reinforced composite material, reference may be made to the above description of the chopped carbon fiber according to the present invention. For the resin contained in the carbon-fiber-reinforced composite material, reference can also be made to the above description of the compound, in particular the pellet.

The method for producing the carbon-fiber-reinforced composite material according to the present invention is not particularly limited, and can be produced by a known method. The carbon-fiber-reinforced composite material according to the present invention can be produced, for example, by the following method which comprises:

providing the chopped carbon fiber according to the present invention and a resin,
preparing a pellet by kneading the molten resin and the chopped carbon fiber, and
molding the prepared pellets under heating to form a carbon-fiber-reinforced composite material.

One preferred embodiment of this manufacturing method comprises producing the chopped carbon fiber using a carbon fiber produced by a dry-wet spinning method. Carbon fibers produced by a dry-wet spinning method more specifically means carbon fibers produced using a precursor fiber produced by a dry-wet spinning method. In this case, carbon fibers having relatively high physical properties (especially relatively high tensile strength and tensile modulus) may be obtained.

For a method of forming a compound (particularly a pellet) from the chopped carbon fiber according to the present invention and a resin, reference may be made to the above description.

A method of molding a compound (particularly, a pellet) to form a carbon-fiber-reinforced composite material is not particularly limited, and a known method can be used. The compound, in particular the pellet, can be molded, for example, by an injection-molding.

[Examples]

Hereinafter, the present invention will be described in more detail with reference to Examples. The present invention is not limited by the description of the examples.

Evaluation Method

In the following Examples and Comparative Examples, chopped carbon fibers were manufactured and their characteristics were evaluated. The evaluation methods are as follows.

Mean single fiber diameter

The mean single fiber diameter ($\mu$m) of carbon fibers constituting chopped carbon fibers was obtained by averaging the diameters of 30 or more carbon fibers measured with an image acquired using an electron microscope, etc.

The tensile strength (MPa) and tensile modulus (strand modulus) (GPa) of carbon fibers constituting chopped carbon fibers were measured according to JIS R7608.

Surface oxygen content of carbon fiber: O/C ratio

The ratio of oxygen atoms to carbon atoms (O/C ratio) on a carbon fiber surface was determined by X-ray photoelectron spectroscopy (XPS) on a carbon fiber prior to application of a sizing agent.

More specifically, fibers are cut and spread on a stainless-steel sample support, then the photoelectron escape angle is set to 90 degrees, MgK$\alpha$ is used as an X-ray source, and the inside of the sample chamber is maintained at a vacuum of $1 \times 10^{-6}$ [Pa]. In order to correct the peak accompanying the charge at the time of measurement, the coupling energy B.E. of the main peak of C1s is first adjusted to 284.6[eV]. The O1s peak area is determined by drawing the baseline of the straight line over 527 to 540[eV]. Further, the C1s peak area is determined by drawing the baseline of the straight line over 281 to 297[eV]. The value 2.6865 is used as the sensitivity-correction factor for O1s peak relative to C1s peak. The ratio of O1s peak area to C1s peak area was calculated to obtain the ratio of the surface oxygen concentration of the carbon fiber.

Amount of attached sizing agent

The amount (% by mass) of the attached sizing agent is a value with respect to the carbon fiber. This was calculated according to JIS R 7604 on the basis of the difference in masses before and after the chopped carbon fiber was subjected to a chemical decomposition by sulfuric acid.

Convergence of carbon fibers

The convergence of carbon fibers was visually determined by evaluating whether they retained the form of chopped fibers (i.e., the form in which the carbon fibers were combined with each other via a sizing agent into a single mass).

"Good (○)" denotes a case where the above-mentioned form was retained.
"Poor (×)" denotes a case where the above-mentioned form was not retained.

Interfacial adhesion

The interfacial adhesion (IFSS: interfacial shear strength) (MPa) was measured by the above-described methods using a pinhole-type tester SFT20 manufactured by Shinsousha Co., Ltd. Specifically, for a chopped carbon fiber with a sizing agent attached to the surface thereof, five single fibers were used for the measurement as a sample (n=5). Procedures (1) to (4) for measuring interfacial shear strength (IFSS) are shown below:

(1) Preparation of thermoplastic resin samples

(a) A measuring plate (16mm×4mm× thickness 0.2mm) with a pinhole (150$\mu$m in diameter and 200$\mu$m in depth) is prepared. A PEEK resin used for measurement (side lengths of about 2 mm) was prepared, placed in a DSC aluminum pan, and melted at 400°C. using a heater.
(b) When the resin melted, the resin was put on an insect pin, and the molten resin was poured into the pinhole for measurement to form a resin part.

(2) Attachment of single fiber
One single fiber cut into 3 to 6 mm was embedded in the resin part of the measuring plate with the pinhole by using a jig (pin vise) while warming the resin. The buried depth was 60$\mu$m.
(3) Connection to load cell
The single fiber embedded in the resin was adhered to a jig (needle) connected to a load cell using an instantaneous adhesive (Aron alpha (trademark)) and cured. At this time, care was taken to have a sufficient adhesive surface so as to prevent the single fiber simply coming off when it is pulling out from the thermoplastic resin, in order to ensure an accurate measurement.
(4) Measurement
A pull-out test was performed in a pull-out mode at 25° C., and from the maximum load, the embedding length, and the fiber diameter, the maximum interfacial shear strength $\tau$ (IFSS, interfacial adhesion) was obtained according to the following equation, and this was used as an index of the interfacial adhesion:

$$\tau = F/(\pi \times d \times L)$$

wherein $\tau$ = Maximum interfacial shear strength (MPa), F = maximum load (maximum drawing load) (mN), L = embedding length ($\mu$m), d = fiber diameter ($\mu$m)).

Single fiber compressive strength of carbon fiber

The single fiber compressive strength (MPa) of a carbon fiber was measured using a single fiber compressor MCT-W200J (manufactured by SHIMADZU Corporation). One single fiber was taken from a carbon fiber bundle and fixed to a sample stage. Then, in a compressive test mode, a measurement was performed under the test force of 200 gf, the loading rate of 0.122 gf/sec, and the holding period of 0 sec.

Amount of decomposition at 400°C.

The weight loss (mass %) for a chopped carbon fiber is the amount of decomposition at 400°C. (mass %), which was measured by a thermogravimetric differential calorimeter (TG-DTA) at 400° C. for 20 minutes under air atmosphere. Since a sizing agent volatilizes at 400° C., this weight loss rate can be used as a value indicating the gas generation rate at high temperature.

Composite production

The composites (the carbon-fiber-reinforced composite materials) used in Examples and Comparative Examples were prepared as follows:
Compounds in the form of a pellet was produced by feeding a chopped carbon fiber according to an example or a comparative example and a resin (PEEK resin, Victrex plc., product name: VICTREX PEEK 90P) to a twin-screw extruder (product name: TEX30X, manufactured by Nippon Steel Corporation) at a fiber weight content of carbon fiber (Wf) of 40 mass %, and kneading and extruding at 380° C.
Then, the pellet above was injection-molded using an injection molding machine (manufactured by Nippon Steel Corporation, product name J-110AD-180H) at a cylinder temperature of 400° C. and a mold temperature of 200° C., thereby producing an ISO 20753 A1 mold test piece.

Composite properties

Tensile strength (MPa), flexural strength (MPa), and flexural modulus (GPa) of the composite were measured according to JIS K7161, respectively.

Retained fiber length

The retained fiber length ($\mu$m) in a composite was determined by observing carbon fibers, which were isolated by a calcination treatment at 585° C. for 2 hours, with a microscope and then measuring the weight average fiber length of about 500 fibers.

Aspect ratio

The aspect ratio was calculated from the retained fiber length (L($\mu$m)) of carbon fibers in a composite and a mean single fiber diameter (D ($\mu$m)) of carbon fibers.

Examples 1 to 5 and Comparative Examples 1 to 4

In Examples 1 to 5 and Comparative Examples 1 to 4, chopped carbon fibers were produced from carbon fibers produced by a wet spinning method, and the characteristics thereof were evaluated.

Example 1

Production of carbon fibers and chopped carbon fibers

Acrylic fibers (single fiber fineness 0.8dtex, 36000 filaments) coated with 0.5 mass% silicone oil was obtained as a carbon-fiber precursor fiber by using an acrylic polymer and through solidifying, washing with water, drying, and drawing according to a wet spinning method. The acrylic fiber was subjected to flameproofing treatment at 250° C. for 1 hour in air to obtain a flameproofing fiber having a 1.36 g/cm$^3$ density (flameproofing step). Next, it was treated at 600° C. and 1400° C.

in a nitrogen gas atmosphere, followed by a surface treatment to obtain a carbon fiber. The resulting carbon fiber had tensile strength: 5300 MPa, tensile modulus (strand modulus):288 GPa, mean single fiber diameter: 5.7 $\mu$m, filament count: 36000 filaments. The O/C ratio on the fiber surface of this carbon fiber was 25%.

The carbon fiber was cut to a mean length of 3 mm to obtain a chopped carbon fiber.

The chopped carbon fiber according to Example 1 was produced by applying a sizing composition in the form of an aqueous solution having the following composition to the above chopped carbon fiber; removing the solvent (water) by drying; and drying the polyimide precursor attached to the carbon fiber at a predetermined temperature (180° C.) for imidization to form a polyimide resin. The amount of the attached sizing agent was 1.5% by mass with respect to the carbon fiber.

Composition of the sizing composition used in Example 1:

- Polyimide (PI) precursor (HP-1632, manufactured by Michelman, Inc.)
- Water

The chopped carbon fiber of Example 1 was evaluated according to the evaluation method described above. The results are shown in Table 1 below.

Example 2

In Example 2, the chopped carbon fiber was produced and tested in the same manner as in Example 1, except that the sizing agent comprised a polyimide (PI) and a blocked isocyanate (BIC, a MEIKANATE TP-11 manufactured by Meisei Chemical Works, Ltd.) in a mass ratio of 2:1. The results are shown in Table 1 below. In this Example 2, a mixed solution containing PI and BIC (solvent=water) was used as a sizing composition and applied to the carbon fiber.

Example 3

In Example 3, a chopped carbon fiber was produced and tested in the same manner as in Example 1, except that the amount of the attached sizing agent was 3.0% by mass with respect to the carbon fiber. The results are shown in Table 1 below.

Example 4

In Example 4, a chopped carbon fiber was produced and tested in the same manner as in Example 1, except that the sizing agent comprised a polyimide and blocked isocyanate in a mass ratio of 1:1. The results are shown in 1 below. In Example 4, a mixed solution containing PI and BIC (solvent=water) was used as the sizing composition and applied to the carbon fiber.

Example 5

In Example 5, a chopped carbon fiber was produced and tested in the same manner as in Example 1, except that the sizing agent was made of a urethane-based resin. The results are shown in Table 1 below. In Example 5, a mixed solution (solvent = water) containing a urethane-based resin (manufactured by SUMIKA COVESTRO URETHANE COMPANY, LTD., product name: Dispercole (trademark) 54) was used as a sizing composition and applied to the carbon fiber.

Comparative Example 1

In Comparative Example 1, a chopped carbon fiber was produced and tested in the same manner as in Example 1, except that the amount of the attached sizing agent was 0.5 mass % with respect to the carbon fiber. The results are shown in Table 1 below.

Comparative Example 2

In Comparative Example 2, a chopped carbon fiber was produced and tested in the same manner as in Example 1, except that a carbon fiber having a fiber surface O/C ratio of 12% was used. The results are shown in Table 2 below.

Comparative Example 3

In Comparative Example 3, a chopped carbon fiber was produced and tested in the same manner as in Example 1, except that the sizing agent was made of a fluorine-based resin. The results are shown in Table 1 below. In Comparative Example 3, a solution (solvent=water) containing a fluoropolymer (PFA, manufactured by AGC Inc.) was used as a sizing composition and applied to the carbon fiber.

Comparative Example 4

In Comparative Example 4, a chopped carbon fiber was produced and tested in the same manner as in Example 1, except that the sizing agent was made of a rubber-based resin. The results are shown in Table 1 below. In Comparative Example 3, a solution (solvent = water) containing a rubber-based resin (rubber-based sizing agent manufactured by Matsumoto Yushi-Seiyaku Co., Ltd.) was used as a sizing composition, and applied to the carbon fiber.

[Table 1]

Table 1

| | | Unit | Example 1 | Example 2 | Example 3 | Example 4 | Example 5 | Comp.Ex. 1 | Comp.Ex. 2 | Comp.Ex. 3 | Comp.Ex. 4 |
|---|---|---|---|---|---|---|---|---|---|---|---|
| Composite | Flexural modulus | GPa | 35.8 | 36.0 | 35.0 | 36.2 | 35.1 | 33.2 | 33.0 | 30.0 | 32.8 |
| | Flexural strength | MPa | 460 | 470 | 452 | 475 | 448 | 435 | 430 | 300 | 420 |
| | Tensile strength | MPa | 300 | 310 | 295 | 315 | 295 | 280 | 280 | 200 | 270 |
| | Aspect ratio (L/D) | - | 19.6 | 20.5 | 20.4 | 20.7 | 20.2 | 18.4 | 17.5 | 22.8 | 14.9 |
| | Retained fiber length | μm | 112 | 117 | 116 | 118 | 115 | 105 | 100 | 130 | 85 |
| Chopped carbon fiber | Weight loss rate (400°C) | % | 0.27 | 0.33 | 0.42 | 0.42 | 0.80 | 0.08 | 0.27 | 1.00 | 0.50 |
| Sizing agent | Fiber convergence | - | O | O | O | O | O | × | O | × | O |
| | Amount attached | mass % | 1.5 | 1.5 | 3.0 | 1.5 | 1.5 | 0.5 | 1.5 | 1.5 | 1.5 |
| | Type | - | PI | PI/BIC =2/1 | PI | PI/BIC =1/1 | Urethane-base | PI | PI | Fluorine-base | Rubber-base |
| | (B × C) | | 186450 | 186450 | 184800 | 188100 | 184800 | 181500 | 176550 | 132000 | 165000 |
| | (A × B) | | 32544 | 32544 | 32256 | 32832 | 32256 | 31680 | 30816 | 23040 | 28800 |
| Carbon fiber | Single fiber compressive Strength (C) | MPa | 1650 | 1650 | 1650 | 1650 | 1650 | 1650 | 1650 | 1650 | 1650 |
| | Interface adhesion (IFSS) (B) | MPa | 113 | 113 | 112 | 114 | 112 | 110 | 107 | 80 | 100 |
| | Surface oxygen conc. (O/C) | % | 25 | 25 | 25 | 25 | 25 | 25 | 12 | 25 | 25 |
| | Mean single fiber diameter | μm | 5.7 | 5.7 | 5.7 | 5.7 | 5.7 | 5.7 | 5.7 | 5.7 | 5.7 |
| | Tensile modulus (A) | GPa | 288 | 288 | 288 | 288 | 288 | 288 | 288 | 288 | 288 |
| | Tensile strength | MPa | 5300 | 5300 | 5300 | 5300 | 5300 | 5300 | 5300 | 5300 | 5300 |

As can be seen in Table 1, Examples 1 to 5, in which the interfacial adhesion of the carbon fiber was 112 to 114 MPa and the amount of the attached sizing agent was 1.5 mass % to 3.0 mass % with respect to the carbon fiber, showed good composite properties. The chopped carbon fibers according to Examples 1 to 5 also exhibited good fiber convergence and a relatively low weight loss rate as measured at 400° C (relatively low gas generation rate at high temperature).

On the other hand, Comparative Example 1, in which the amount of the attached sizing agent to the carbon fiber was 0.5 mass %, and Comparative Examples 2 to 4, in which the interfacial adhesion of the carbon fiber was 80 to 107 MPa, exhibited poor composite properties as compared with Examples 1 to 5. The chopped carbon fibers of Comparative Examples 1 and 3 had relatively poor fiber convergence. In addition, Comparative Example 3 exhibited a relatively large weight loss rate (gas generation rate) at high temperature.

Examples 1 to 4 had a lower gas generation rate compared to Example 5. This may be due to the fact that the sizing agent of Example 5 was composed of a urethane-based resin, while the sizing agents of Examples 1 to 4 contained a polyimide resin (PI).

Furthermore, Examples 1 to 2 had a further reduced gas generation rate compared to Examples 3 to 4. The reason for this may be due to the fact that the amount of the attached sizing agent was relatively reduced in Examples 1 to 2 as compared with Example 3, and the ratio of PI in the sizing agent was relatively large in comparison with Example 4.

Examples 6 to 9 and Comparative Example 5

In Examples 6 to 9 and Comparative Example 5, chopped carbon fibers were produced from carbon fibers produced by a dry-wet spinning method, and the characteristics thereof were evaluated.

Example 6

Acrylic fiber (single fiber fineness 0.8dtex, 3000 filaments) coated with 0.5 mass % silicone oil was obtained as a carbon-fiber precursor fiber by using an acrylic polymer and through solidifying, washing with water, drying, and drawing according to a dry-wet spinning method. The acrylic fiber was subjected to flameproofing treatment at 250° C. for 1 hour in air to obtain a flameproofed fiber having a 1.35g/cm$^3$ density (flameproofing step). Next, it was treated at 600° C. and 1400° C. in a nitrogen gas atmosphere, followed by surface treatment to obtain a carbon fiber. The resulting carbon fiber had tensile strength: 6400MPa, tensile modulus (strand modulus):295GPa, mean single fiber diameter: 5.5 $\mu$m, and filament count: 3000 filaments. The O/C ratio on the fiber surface of this carbon fiber was 12%.

The carbon fiber was cut to a mean length of 3mm to obtain a chopped carbon fiber.

A sizing composition in the form of an aqueous solution having the following composition was applied to the chopped carbon fiber, and the solvent (water) was removed by drying, in order to produce the chopped carbon fiber according to Example 6. The amount of the attached sizing agent was 1.5% by mass.

Composition of the sizing composition used in Example 6:

- Polyimide (PI) precursors (HP-1632, manufactured by Michelman, Inc.)
- Water

The chopped carbon fiber of Example 6 was evaluated according to the evaluation method described above. The results are shown in Table 2 below.

Example 7

In Example 7, a chopped carbon fiber was produced and tested in the same manner as in Example 6, except that a carbon fiber having a fiber surface O/C ratio of 20% was used. The results are shown in Table 2 below.

Example 8

In Example 8, a chopped carbon fiber was produced and tested in the same manner as in Example 6, except that the carbon fiber having a fiber surface O/C ratio of 25% was used. The results are shown in Table 2 below.

Example 9

In Example 9, a chopped carbon fiber was produced and tested in the same manner as in Example 6, except that the amount of the attached sizing agent was 3.0 % by mass. The results are shown in Table 2 below.

Comparative Example 5

In Comparative Example 5, a chopped carbon fiber was produced and tested in the same manner as in Example 6, except that the amount of the attached sizing agent was 0.5 % by mass. The results are shown in Table 2 below.

[Table 2]

Table 2

| | | | Unit | Example 6 | Example 7 | Example 8 | Example 9 | Comp.Ex. 5 |
|---|---|---|---|---|---|---|---|---|
| Chopped carbon fiber | Carbon fiber | Tensile strength | MPa | 6400 | 6400 | 6400 | 6400 | 6400 |
| | | Tensile modulus (A) | GPa | 295 | 295 | 295 | 295 | 295 |
| | | Mean single fiber diameter | μm | 5.5 | 5.5 | 5.5 | 5.5 | 5.5 |
| | | Surface oxygen conc. O/C | % | 12 | 20 | 25 | 12 | 12 |
| | | Interface adhesion (IFSS) (B) | MPa | 117 | 123 | 130 | 116 | 120 |
| | | Single fiber compressive Strength (C) | MPa | 2000 | 2000 | 2000 | 2000 | 2000 |
| | | (A x B) | | 34515 | 36285 | 38350 | 34220 | 35400 |
| | | (B x C) | | 234000 | 246000 | 260000 | 232000 | 240000 |
| | Sizing agent | Type | - | PI | PI | PI | PI | PI |
| | | Amount attached | mass% | 1.5 | 1.5 | 1.5 | 3.0 | 0.5 |
| | Fiber convergence | | - | O | O | O | O | × |
| | Weight loss rate (400 °C) | | % | 0.27 | 0.27 | 0.28 | 0.40 | 0.10 |
| Composite | Retained fiber length | | μm | 115 | 121 | 123 | 117 | 112 |
| | Aspect ratio (L/D) | | - | 20.9 | 22.0 | 22.4 | 21.3 | 20.4 |
| | Tensile strength | | MPa | 320 | 330 | 335 | 318 | 310 |
| | Flexural strength | | MPa | 480 | 485 | 490 | 480 | 465 |
| | Flexural modulus | | GPa | 37.2 | 37.5 | 38.0 | 37.1 | 36.7 |

As can be seen in Table 2, Examples 6 to 9, in which the interfacial adhesion of the carbon fibers was 116 to 130 MPa and the amount of the attached sizing agent was 1.5 % by mass to 3.0 % by mass with respect to the carbon fiber, exhibited good composite properties. The chopped carbon fibers according to Examples 6 to 9 also exhibited good fiber convergence and a relatively low weight loss rate as measured at 400° C (relatively low gas generation rate at high temperature).

On the other hand, Comparative Example 5, in which the amount of the attached sizing agent with respect to the carbon fiber was 0.5% by mass, exhibited poor composite properties as compared with Examples 6 to 9. In addition, the chopped carbon fiber of Comparative Example 5 exhibited poor fiber convergence, and the carbon fiber aspect ratio in the composite was relatively low.

In Examples 6 to 8, the gas generation rate was further reduced as compared with Example 9. This may be due to the fact that Example 9 had relatively larger amount of the sizing agent.

**Claims**

1. A chopped carbon fiber comprising a carbon fiber and a sizing agent attached to the surface of the carbon fiber,

    wherein the chopped carbon fiber exhibits an interfacial adhesion of 108 MPa to 140 MPa, and
    wherein the amount of the attached sizing agent is 0.7 % by mass to 4.0 % by mass, with respect to the carbon fiber.

2. The chopped carbon fiber of claim 1, wherein the sizing agent comprises a polyimide resin.

3. The chopped carbon fiber according to claim 2, wherein the amount of the polyimide resin in the sizing agent is more than 50% by mass, with respect to the total amount of a resin in the sizing agent.

4. The chopped carbon fiber according to any one of claims 1 to 3, wherein the amount of the attached sizing agent is 0.7% by mass to 2.5% by mass, with respect to the carbon fiber.

5. The chopped carbon fiber according to any one of claims 1 to 3, wherein the interfacial adhesion is 115 MPa to 135 MPa.

6. The chopped carbon fiber according to any one of claims 1 to 3, wherein the carbon fiber has a surface oxygen concentration O/C of 15% to 35%.

7. The chopped carbon fiber according to any one of claims 1 to 3, wherein the carbon fiber has a mean single fiber diameter of 4.5 $\mu$m to 7.0 $\mu$m.

8. The chopped carbon fiber according to any one of claims 1 to 3, wherein the carbon fiber has a mean length of 1 mm to 30 mm.

9. The chopped carbon fiber according to any one of claims 1 to 3, wherein the carbon fiber satisfies at least one of the following conditions (a) to (c):

    (a) the tensile strength of the carbon fiber is 4000 MPa to 8000 MPa,
    (b) the tensile modulus of the carbon fiber is 270 GPa to 310 GPa,
    (c) the single fiber compressive strength of the carbon fiber is 1500 MPa to 2500 MPa.

10. The chopped carbon fiber according to any one of claims 1 to 3, wherein a weight loss rate when heat-treated at 400 °C. for 20 minutes in air is less than 0.40%.

11. The chopped carbon fiber according to any one of claims 1 to 3 for use in a compound molding.

12. A method of producing a carbon-fiber-reinforced composite material comprising:

    providing the chopped carbon fiber according to any one of claims 1 to 3 and a resin,
    preparing a pellet by kneading the melted resin and the chopped carbon fiber, and
    molding the prepared pellets under heating to form a carbon-fiber-reinforced composite material.

13. The method for producing a carbon-fiber-reinforced composite material according to claim 12, comprising using a carbon fiber produced by a dry-wet spinning method to prepare the chopped carbon fiber.

[FIG.1]

Fig. 1

## INTERNATIONAL SEARCH REPORT

| International application No. |
|---|
| **PCT/JP2024/019501** |

### A.  CLASSIFICATION OF SUBJECT MATTER

*D06M 15/59*(2006.01)i; *C08J 5/06*(2006.01)i; *D06M 101/40*(2006.01)n
FI:  D06M15/59; C08J5/06; D06M101:40

According to International Patent Classification (IPC) or to both national classification and IPC

### B.  FIELDS SEARCHED

Minimum documentation searched (classification system followed by classification symbols)

D06M13/00-15/715; B29B11/16; B29B15/08-15/14; C08J5/04-5/10; C08J5/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| X | JP 2013-216997 A (TOHO TENAX CO., LTD.) 24 October 2013 (2013-10-24) | 1, 4, 6-9, 11-13 |
| Y | claims, examples 1, paragraphs [0020]-[0023], [0043] | 1-13 |
| Y | JP 2540555 B2 (MITSUI TOATSU CHEMICALS, INC.) 02 October 1996 (1996-10-02) examples 1, 2 | 1-13 |
| A | JP 2022-186651 A (FORMOSA PLASTICS CORP.) 15 December 2022 (2022-12-15) claims | 1-13 |
| P, A | JP 2023-141277 A (TEIJIN LIMITED) 05 October 2023 (2023-10-05) claims | 1-13 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

| International application No. |
| :--- |
| **PCT/JP2024/019501** |

| Patent document cited in search report | | | Publication date (day/month/year) | Patent family member(s) | | | Publication date (day/month/year) |
| :--- | :--- | :--- | :--- | :--- | :--- | :--- | :--- |
| JP | 2013-216997 | A | 24 October 2013 | (Family: none) | | | |
| JP | 2540555 | B2 | 02 October 1996 | JP | 64-40569 | A | |
| JP | 2022-186651 | A | 15 December 2022 | EP | 4098682 | A1 | |
| | | | | claims | | | |
| | | | | US | 2022/0396914 | A1 | |
| | | | | TW | 202248495 | A | |
| | | | | CN | 114134716 | A | |
| JP | 2023-141277 | A | 05 October 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002339246 A
- JP 2003003376 A
- JP 2005264383 A
- JP 2005281955 A
- JP 2016003412 A
- JP 60239521 A
- JP S61296123 A